# EUROPÄISCHE PATENTSCHRIFT

(11) **EP 1 012 222 B1**
(45) Veröffentlichungstag und Bekanntmachung des Hinweises auf die Patenterteilung: **29.10.2003**
(21) Anmeldenummer: 98952515.9
(22) Anmeldetag: 21.08.1998
(51) Int. Cl.: C12C 7/04, C12C 7/06

(54) **GEKAPSELTE/LUFTFREIE SCHROTUNG UND MAISCHEERZEUGUNG**
ENCAPSULATED / AIRLESS GRINDING AND PRODUCTION OF MASH
CONCASSAGE ET PRODUCTION DE MOUT DANS UNE INSTALLATION HERMETIQUE/EXEMPTE D'AIR

(30) Priorität: 11.09.1997 DE 19740036
(43) Veröffentlichungstag der Anmeldung: 28.06.2000
(73) Patentinhaber: Hrch. Huppmann GmbH, 97318 Kitzingen (DE)
(72) Erfinder: LENZ, August, D-97318 Kitzingen (DE); HERRMANN, Hans, D-97334 Sommerach (DE); KANTELBERG, Bernd, D-97332 Volkach (DE)
(74) Vertreter: Böck, Bernhard, Dipl.-Ing.
(86) Internationale Anmeldenummer: DE9802523
(87) Internationale Veröffentlichungsnummer: WO99013047

(56) Entgegenhaltungen:
- EP-A- 0 597 462
- FR-A- 2 506 324
- GB-A- 907 305
- DATABASE WPI Section Ch, Week 9646 Derwent Publications Ltd., London, GB; Class D16, AN 96-463135 XP002098137 & RU 2 054 467 C (TVER PIVO STOCK CO) , 20. Februar 1996
- PATENT ABSTRACTS OF JAPAN vol. 015, no. 461 (C-0887), 22. November 1991 & JP 03 196848 A (SATAKE ENG CO LTD), 28. August 1991

## Beschreibung

Die Erfindung betrifft die Schrotung und Maischeerzeugung zur Bierbereitung in einer Brauerei, bei dem der zu verarbeitende Rohstoff in einem Mühlensystem aufgebrochen und anschließend eingemaischt wird.

Der Bierbereitungsprozeß beginnt in seiner ersten Phase mit der Schrotung der Rohstoffe. Hierbei wird der zur Verarbeitung kommende Rohstoff in einer Schrotmühle, beispielsweise einer Hammermühle, Walzenmühle oder Tellermühle, aufgebrochen und je nach Bedarf in ein Schrot verschiedenartigster Zusammensetzung und Konsistenz umgewandelt. Beim Aufbruch des zur Verarbeitung kommenden Rohstoffs, beispielsweise Malz, Gerste, Hirse oder ähnliches, werden die verschiedenen Bestandteile des Rohstoffes aufgrund der Strukturumwandlung dem Luftsauerstoff ausgesetzt, der in der Atmosphäre im Inneren der Schrotmühlen vorhanden ist. Dies führt zu Oxydationsvorgängen und enzymatischen Aktivitäten, die den Bierbereitungsprozeß negativ beeinflussen, da sie geschmacks- und stabilitätsbeeinträchtigende Auswirkungen haben.

Beim anschließenden Einmaischen des geschrotenen Rohstoffs am Ende des Mühlensystems kommt es zur weiteren Oxydation der Rohstoffbestandteile. Da beim Einmaischen durch die Wasserzugabe die Aktivität der Enzyme und die damit verbundenen Oxydationsvorgänge erheblich verstärkt werden, wird die unerwünschte Oxydation der Rohstoffe in den zum Einmaischen verwendeten Vormaischern, Einteigschnecken, Maischpumpen und im Maischgefäß fortgesetzt und verstärkt. Dies gilt um so mehr, da die Temperatur des beigemischten Wassers beim Einmaischen aufgrund brauspezifischer Eigenheiten beim Temperaturoptimum für die Wirksamkeit der Enzymgruppen liegt.

Aufgabe der vorliegenden Erfindung ist es deshalb, ein Verfahren zur Schrotung und Maischeerzeugung in einem Mühlensystem zur Verfügung zu stellen, bei dem die Oxydation der verwendeten Rohstoffe durch die Schrotung und die Einmaischung minimiert oder ausgeschlossen wird. Weiterhin ist es Aufgabe der vorliegenden Erfindung, eine Anlage zur Schrotung und Maischeerzeugung zur Verfügung zu stellen, in dem das erfindungsgemäße Verfahren durchgeführt werden kann.

Gelöst werden diese Aufgaben durch ein Verfahren mit den Merkmalen des Anspruchs 1 und einer Anlage mit den Merkmalen des Anspruchs 9.

Vorteilhafte Ausgestaltungen der Erfindung sind Gegenstand der Unteransprüche.

Bei dem erfindungsgemäßen Verfahren wird vor Befüllung des Mühlensystems mit dem zu schrotenden Rohstoff das Mühlensystem mit einem Inertgas befüllt. Der im Inneren des Mühlensystem befindliche Luftsauerstoff wird durch das Inertgas im wesentlichen verdrängt. Das heißt, vor Befüllung des Mühlensystems befindet sich im wesentlichen kein Luftsauerstoff mehr in dem Mühlensystem. Nach der daran anschließenden Befüllung des Mühlensystems aus dem Rohstoffsilo wird das Mühlensystem im wesentlichen gasdicht verschlossen. Diese Abdichtung des Mühlensystems betrifft alle Anlagenteile, an denen Luftsauerstoff ungehindert in das Mühlensystem eindringen könnte, also insbesondere den Einfüllschacht für die Rohstoffzufuhr. Der Übergang des Mühlensystems zum nachgeschalteten Maischgefäß ist durch die Flüssigkeit in den Rohrleitungen und in der Maischepumpe abgedichtet. Die Schrotung und Einmaischung der Rohstoffe erfolgt dann im Ergebnis in dem gasdicht gekapselten Mühlensystem in einer im wesentlichen sauerstoffreien Inertgasatmosphäre. Die Oxidation von Rohstoffpartikeln kann damit stark minimiert werden.

Während der Befüllung des Mühlensystems mit Rohstoff aus dem Rohstoffsilo muß das Mühlensystem kurzzeitig geöffnet werden. Dadurch kann durch die Rohstoffzufuhr etwas Luft in das Mühlensystem eindringen. Auch mit dem zugeführten Rohstoff wird etwas Luftsauerstoff in die Anlage eingetragen. Falls zur weiteren Qualitätsverbesserung die Verdrängung dieses oder durch andere kleinere Lecks eingedrungenen Restsauerstoffs gewünscht wird, kann das Mühlensystem nachfolgend zumindest bereichsweise mit Inertgas gespült werden. Auf diese Weise wird Luftsauerstoff, der während der Befüllung des Mühlensystems oder über andere Lecks eingedrungen ist, verdrängt. Überschüssiges Gasvolumen wird dazu beispielsweise durch Inertgasüberdruck aus dem Mühlensystem gedrückt. Die Spülung mit Inertgas kann auch nach Beginn des Schrotungs- und Einmaischprozesses fortgesetzt werden. Im Ergebnis wird dadurch ermöglicht, den gesamte Schrotungs- und Einmaischprozeß in einer kontrollierten Inertgasatmosphäre zu führen. Damit stehen während des Produktionsprozesses nur noch geringe Spuren von Luftsauerstoff zur Verfügung und unerwünschte Oxydationsvorgänge werden im wesentlichen vermieden.

Besonders vorteilhaft ist es, eine Inertgasatmosphäre mit einem Inertgasüberdruck in dem Mühlensystem zu erzeugen. Infolge dieses Überdrucks kann kein Luftsauerstoff durch eventuell vorhandene, kleiner Lecks in die Anlage eindringen. Die konstruktiven Toleranzen bezüglich der Gasdichtigkeit der Anlage können deshalb weiter ausgelegt werden, was eine Kostenreduktion bei der Fertigung der erforderlichen Anlagenkomponenten erlaubt.

Das Inertgas sollte mit einem Überdruck im Bereich von 2 bis 100 mbar in die Anlage eingespeist werden. Die Anlage sollte dabei eine ausreichende Gasdichtigkeit aufweisen, um diesen Überdruck im wesentlichen halten zu können.

Als Inertgase können alle Gase verwendet werden, die eine Oxydation der Rohstoffe während der Schrotungs- und Einmaischprozesse verhindern oder zumindest minimieren und dabei lebensmitteltechnisch unbedenklich sind. Besonders vorteilhaft ist es jedoch, ein Inertgas einzusetzen, das schwerer ist als Luft. Ist das Inertgas schwerer als Luft, so wird der Luftsauerstoff in dem Mühlensystem aufgrund der des höheren spezifischen Gewichts des Inertgases nach oben verdrängt. Inertgas, das in das Mühlensystem eingeleitet wird, sammelt sich an der tiefsten Stelle des Mühlensystems und füllt von hier aus ausgehend das Mühlensystem auf. Die im Mühlensystem eventuell enthaltene Restluft schwimmt somit auf einem Polster aus Inertgas und kann deshalb durch einfache Zugabe weiterer Mengen von Inertgas immer weiter nach oben hin verdrängt werden. Dies hat insbesondere dann Vorteile, wenn die Anlage nach der Befüllung mit Rohstoffen nicht mit einer Inertgasströmung gespült werden soll. Mit dem Rohstoff eingetragener Sauerstoff kann in diesem Fall durch das schwerere Inertgas nach oben in der Anlage verdrängt werden, wo eine Oxidation der Rohstoffe nicht zu befürchten ist, da die Rohstoffe noch nicht aufgebrochen sind.

Da das erfindungsgemäße Verfahren zur Herstellung eines Lebensmittels dient, sollten vorzugswürdig Kohlendioxyd, Stickstoff oder ähnliche Gasgemische als Inertgase verwendet werden. Diese Gase besitzen ausreichende oxydationshemmende Wirkung, um die unerwünschte Oxydation der Rohstoffe zu verhindern. Da diese Gase anteilsmäßig auch in der Atemluft enthalten sind, ergibt sich aufgrund des Einflusses dieser Inertgase auf die Rohstoffe keine relevante toxische Wirkung.

Besonders vorzugswürdig ist der Einsatz von Stickstoff, der durch ein vorhergehendes Gastrennverfahren aus Luft gewonnen wurde. Da Luft einen hohen Stickstoffgehalt aufweist, kann dieses Inertgas in ausreichender Reinheit mit einem Gastrennverfahren sehr kostengünstig aus Luft hergestellt werden. Als Gastrennverfahren können beispielsweise an sich bekannte Membrantrennverfahren verwendet werden. Die Herstellung des Stickstoffs aus Luft hat darüber hinaus den Vorteil, daß die Anlage damit bezüglich des Inertgases eine ausgeglichene Emissionsbilanz aufweist. Stickstoff, der aus der Anlage abgeleitet wird, mischt sich wieder mit der Luft, aus der der Stickstoff zuvor abgespalten wurde. Insgesamt wird kein Stickstoff aus externen Quellen emittiert.

Prinzipiell ist es erfindungsgemäß gleichgültig, in welche Richtung das Inertgas bei der Spülung des Mühlensystems strömt. Die Richtung der Strömung wird dabei in erster Linie davon bestimmt, wo Inertgas zugeführt wird und an welcher Stelle des Mühlensystems überschüssiges Inertgas ausströmen kann, da das Gas von den Einlaßöffnungen zu den Auslaßöffnungen strömt. Besonders vorzugswürdig ist es, die Strömung des Inertgas in dem Mühlensystem entgegen der Bewegungsrichtung des Rohstoffes während des Schrotungs- und Einmaischprozesses zu richten. Im Ergebnis strömt das Gas den Rohstoffpartikeln entgegen und kann die Rohstoffe deshalb besonders effektiv umspülen und insbesondere auch Luftsauerstoff, der an der Oberfläche der Rohstoffpartikel gebunden ist, verdrängen. Ist das Inertgas schwerer als Luft, unterstützt die nach oben gerichtete Strömung zudem die Verdrängung des Sauerstoffs nach oben infolge des höheren spezifischen Gewichts. Die Auslaßöffnung sollte deshalb möglichst hoch und die Einlaßöffnung für das Inertgas möglichst tief in dem Mühlensystem angeordnet sein.

In erster Linie ist das erfindungsgemäße Verfahren zur Verdrängung des Luftsauerstoffs aus dem Mühlensystem vorgesehen. Es ist jedoch erfindungsgemäß ohne weiteres möglich, auch das dem Mühlensystem nachgeschaltete Maischgefäß in das Verfahren zur Verdrängung des Luftsauerstoffs einzubeziehen. Dazu muß das Maischgefäß in äquivalenter Weise wie das Mühlensystem an die Gaszufuhr angeschlossen und vor der Befüllung mit Inertgas vorgespannt werden. Nach der Befüllung mit Inertgas ist das Maischgefäß dann ebenfalls gasdicht zu kapseln, um ein Eindringen von Sauerstoff zu verhindern. Damit wird der Luftsauerstoff auch aus dem Maischgefäß verdrängt und unerwünschte Oxydationsvorgänge an der Oberfläche der Maische und des Maischgefäßes unterbunden.

Das Maischgefäß kann entweder unmittelbar an die Gaszufuhr angeschlossen werden oder mittelbar über das Mühlensystem mit Inertgas versorgt werden. Wird das Maischgefäß mittelbar versorgt, kann eine eigene Druckregelung für das Maischgefäß entfallen. Unterschiedliche Drücke im Mühlensystem und im Maischgefäß, die die Maische von einem Anlagenteil in den anderen drücken würden, werden durch einen Gasdruckausgleich zwischen Maischgefäß und Mühlensystem verhindert.

Erfindungsgemäß ist es ausreichend, das Mühlensystem mit einer bestimmten Menge Inertgas zu befüllen und eventuell nachfolgend ungeregelt mit einer festen Menge Inertgas zu spülen, um den Luftsauerstoff zu verdrängen. Eine bessere Nutzung der erforderlichen Menge von Inertgas und eine vollständigere Unterbindung der unerwünschten Oxydationsvorgänge ist jedoch dadurch möglich, daß die Spülung des Mühlensystems mit Inertgas in Abhängigkeit vom Restgehalt an Luftsauerstoff geregelt wird. Dabei werden mit Sensoren an einer oder mehreren Stellen des Mühlensystems die Gaszusammensetzung gemessen und in Abhängigkeit davon die Zufuhr von Inertgas geregelt. Somit wird kein Inertgas verschwendet und zugleich dafür gesorgt, daß der Luftsauerstoffrestgehalt ein zulässiges Maß nicht überschreitet.

Anlagen zum Betrieb des erfindungsgemäßen Verfahrens können in wesentlichen Teilen wie konventioneller Mühlensysteme ausgestaltet sein. Konventionelle Mühlensysteme werden über eine Rohstoffzufuhr mit zu verarbeitenden Rohstoffen beschickt, die innerhalb der Anlage einem Schrotungs- und Einmaischungsprozeß unterworfen werden und als Maische durch den Maischeabzug in das Maischgefäß übergeführt werden. Diese konventionellen Mühlensysteme sind erfindungsgemäß derart zu modifizieren, daß die Anlagenaußenwandung des Mühlensystems im wesentlichen gasdicht gekapselt ist und die Rohstoffzufuhr mit einem im wesentlichen gasdichten Dichtungsorgan absperrbar ist. Im Ergebnis entsteht so ein Mühlensystem, das keine relevanten Leckstellen aufweist, durch die Luftsauerstoff unkontrolliert in größeren Mengen eindringen kann.

Die erfindungsgemäße Anlage muß darüber hinaus eine Gaszufuhr aufweisen, mit der das Innere der Anlage mit Inertgas beaufschlagt werden kann. Über die Gaszufuhr kann das Anlageninnere mit Inertgas gefüllt werden, wobei sich im Anlageninneren eine Inertgasatmosphäre ausbildet und der Luftsauerstoff verdrängt wird. Während der Befüllung der Anlage mit Inertgas oder Rohstoff entweichen überschüssige Volumenanteile der Gasatmosphäre im Anlageninneren über ein geöffnetes Ventil oder ähnliches nach außen. Nach der Beschickung mit Inertgas und Rohstoff wird die Anlage gasdicht gekapselt und es kann kein Luftsauerstoff in das Mühlensystem eindringen.

Soll auch der mit dem zugeführten Rohstoff erneut in die Anlage eingetragene Luftsauerstoff zur Steigerung der Qualität verdrängt werden, ist die Gaszufuhr nach der Befüllung mit Rohstoff erneut zu öffnen und infolge des daraus resultierenden Überdrucks wird Gas an einem Ventil oder ähnlichem aus Anlageninneren nach außen gedrückt und das Anlageninnere im Ergebnis mit Inertgas gespült. Somit kann der mit dem Rohstoff eingetragene Luftsauerstoff aus dem Anlageninneren entfernt werden. Die Gaszufuhr sollte auch während des weiteren Schrotungsund Einmaischprozesses fortgeführt werden, so daß das Eindringen von Luftsauerstoff durch einen Innendruck wirksam verhindert wird und Volumenveränderungen infolge des Maischeabzugs ausgeglichen werden. Das aus der Anlage austretende Inertgas bzw. Gas-Luft-Gemisch kann erfindungsgemäß aufgefangen und entweder in Freie abgeleitet oder zur weiteren Verwendung in eine Rückgewinnungsanlage überführt werden.

Soll auch der Produktionsprozeß im Maischgefäß unter Ausschluß von Sauerstoff geführt werden, muß das Maischgefäß ebenfalls gasdicht absperrbar sein Die Zufuhr von Inertgas kann unmittelbar aus der Gasversorgung oder Mittelbar über das Mühlensystem erfolgen. Dabei sollte ein Druckausgleich zwischen beiden Anlagenkomponenten vorgesehen werden, um Differenzdrücke zu verhindern.

Das Dichtungsorgan zum Abschluß der Rohstoffzufuhr kann besonders einfach als im wesentlichen gasdichte Klappe ausgeführt werden. Derartige Klappen sind im Prinzip bekannt und müssen lediglich dahingehend modifiziert werden, das eine gasdichte Dichtungsfuge zwischen Klappe und Wandung der Rohstoffzufuhr vorgesehen ist.

Selbstverständlich ist es ausreichend, das Inertgas lediglich an einer Stelle der Anlage zuzuführen. Im bezug auf eine günstigere Anlagensteuerung ist es jedoch vorteilhaft, Einlaßöffnungen für die Inertgaszufuhr im Malzrumpf und/oder im Konditionierungsschacht und/oder im Mühlenkörper anzuordnen. Damit kann die Anlage von unten nach oben mit Inertgas gefüllt werden und falls erforderlich während des Schrotungs- und Einmaischprozesses eine besonders effektive nach oben gerichtete Inertgasströmung ausgebildet werden. Um eine bessere Gasverteilung zu erreichen, können in jedem Anlagenteil jeweils mehrere Einlaßöffnungen zur Inertgaszufuhr vorgesehen sein. Sind in den verschiedenen Anlageteilen jeweils separate Gaszufuhr vorgesehen, ist es zudem möglich, einzelne Anlagenteile, beispielsweise den Mühlenkörper und den Konditionierungsschacht sehr schnell durch eine starke Gasbeaufschlagung mit Inertgas zu spülen, so daß der Schrotungs- und Einmaischprozeß sofort beginnen kann, ohne daß auf eine vollständige Verdrängung des Luftsauerstoffs auch aus dem darüberliegenden Malzrumpf gewartet werden müßte. Allgemein gesagt, kann die Verdrängung des Luftsauerstoffs besser beeinflußt werden, wenn in allen Anlageteilen separate Einlaßöffnungen für die Gaszufuhr vorgesehen sind.

Im Mühlenkörper sollte vorzugswürdig die Einlaßöffnung für die Inertgaszufuhr im Bereich zwischen Schrotmühle und Maische angeordnet sein. In der Schrotmühle werden die zu verarbeitenden Rohstoffe aufgebrochen und sind deshalb unmittelbar daran anschließend besonders oxydationsempfindlich. Deshalb sollten die Rohstoffpartikel in diesem Bereich besonders intensiv mit Inertgas umspült werden, um eine Oxydation mit eventuell vorhandenem Restsauerstoff so weit wie möglich zu verhindern.

Soll der Luftsauerstoffrestgehalt in der Anlage geregelt werden, müssen je nach Regelungsalgorithmus in den verschiedenen Anlagebereichen Sensoren zur Messung der Gasatmosphäre angeordnet werden. Mit diesen Sensoren läßt sich die Zusammensetzung der Gasatmosphäre in den jeweiligen Bereichen feststellen und aufgrund dieser Daten die Inertgaszufuhr in die einzelnen Anlagebereiche regeln.

Da die Anlage erfindungsgemäß im wesentlichen gasdicht ausgeführt ist und über eine Gaszufuhr Inertgas zugeführt wird, ist in der Anlage ein Sicherungsventil zur Sicherung gegen übermäßige Über- oder Unterdrükke vorzusehen Wird beispielsweise ungewollt zuviel Inertgas zugeführt, können sich unzulässig hohe Überdrücke aufbauen. Um eine Beschädigung der Bauteilkomponenten zu verhindern, ist es deshalb erforderlich, in diesem Fall den sich aufbauenden Überdruck über ein Sicherungsventil abzulassen. Dieses oder ein zweites Sicherungsventil muß auch bei übermäßigen Unterdrücken innerhalb der Anlage geöffnet werden. Da durch den Maischeabzug während des Einmaischprozesses permanent Volumen abgezogen wird, kann sich im Falle einer unzureichenden Nachführung von Inertgas ein Unterdruck in der Anlage aufbauen.

Besonders vorteilhaft ist es den Innendruck im Anlageninneren permanent zu messen und ein regelbares Einlaßventil für Inertgas sowie ein regelbares Auslaßventil in Abhängigkeit vom Innendruck von einem Regler anzusteuern. Durch diesen Regelkreis kann unabhängig vom Zustand des sonstigen Produktionsprozesses für einen konstanten Inertgasüberdruck in der Anlage gesorgt werden. Unzulässige Über- und Unterdrücke sind dann ebenfalls ausgeschlossen.

Besonders vorzugswürdig ist es, wenn die Anlage über ein Wasserschloß entlüftbar ist. In derartige Wasserschlössern kann durch Ablassen des eingefüllten Wassers ein großer Querschnitt geöffnet werden, was beispielsweise bei der Befüllung der Anlage mit Inertgas vor der Rohstoffzuführung das Austreten der verdrängten Luft aus der Anlage erleichtert bzw. beschleunigt. Auch alle anderen Entgasungsvorgänge können über Verdrängung der entsprechenden Gase über das geöffnete-Wasserschloß beschleunigt werden.

Erfindungsgemäß können in den Rohrleitungen der Gaszufuhr Ventile vorgesehen werden, so daß die Gaszufuhr insgesamt durch Absperrung der Hauptzufuhr und/oder die Gaszufuhr zu einzelnen Anlageteilen durch Absperrung der jeweiligen Zufuhrleitung ermöglicht wird. Dazu können insbesondere stufenlos verstellbare und/oder elektrisch betätigbare Ventile eingesetzt werden.

Nachfolgend wird die Erfindung anhand lediglich bevorzugte Ausführungsformen einer erfindungsgemäßen Anlage darstellender Zeichnung näher erläutert. Es zeigt:

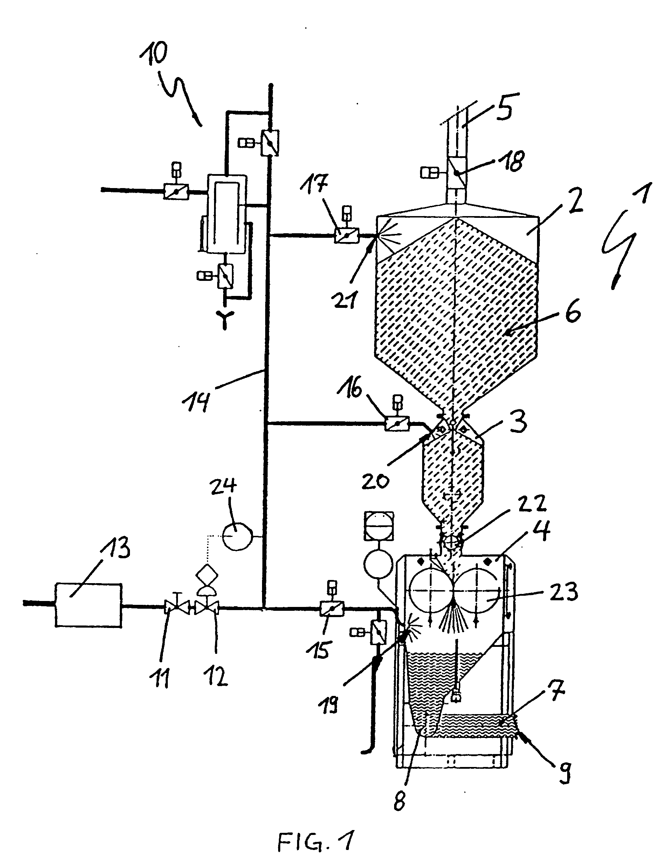

- **Fig. 1**: in schematischer Darstellung den Aufbau einer ersten Ausführungsform einer erfindungsgemäßen Anlage zur Schrotung und Maischeerzeugung.
- **Fig. 2**: in schematischer Darstellung den Aufbau einer zweiten Ausführungsform einer erfindungsgemäßen Anlage zur Schrotung und Maischeerzeugung.

Das Mühlensystem 1 mit dem Malzrumpf 2, dem Konditionierungsschacht 3 und dem Mühlenkörper 4 kann über die Rohstoffzufuhr 5 aus einem nicht dargestellten Rohstoffsilo mit dem Rohstoff 6 beschickt werden. Der Rohstoff 6 wird in einem Schrotungs- und Einmaischprozeß innerhalb des Mühlensystems verarbeitet und die Maische 7 von der Maischepumpe 8 über dem Maischeabzug 9 in ein nicht dargestelltes Maischgefäß gepumpt.

Soll das Mühlensystem neu beschickt werden, wird erfindungsgemäß zunächst das Wasserschloß 10 entwässert, so daß die im Anlageinneren enthaltene Luft drucklos an dieser Stelle entweichen kann. Nach Öffnung der Absperrventile 11 und 12 in der Hauptzufuhr strömt das Inertgas aus dem Gasreservoir 13 in das Leitungssystem 14 über. Nun werden die Ventile 15, 16 und 17 in aufsteigender Reihenfolge geöffnet und das Inertgas, das schwerer ist als Luft, füllt die Anlage vom tiefsten Punkt ausgehend aufsteigend auf. Von dem Inertgaspolster getragen, wird die in dem Anlageinneren enthaltene Luft durch das geöffnete Wasserschloß 10 aus dem Anlageinneren nach außen gefördert. Sobald die gesamte Luft aus dem Anlageinneren durch das Inertgas verdrängt ist, wird das Wasserschloß 10 geschlossen und der Malzrumpf 2 über die Rohstoffzufuhr 5 mit Rohstoff befüllt. Sobald ausreichend Rohstoff zugeführt ist, wird die Dichtungsklappe 18 geschlossen, so daß keinerlei Luft von außen in das Anlageinnere eindringen kann.

Über die Einlaßöffnungen 19, 20 und 21 kann Inertgas in das Anlageinnere gefördert. Durch die zusätzlichen Volumenanteile des eingeförderten Inertgases wird im Inneren der Anlage ein Überdruck aufgebaut, der ein Eindringen von Luft aus der Außenatmosphäre ausschließt.

Anschließend wird durch Starten der Speisewalze 22 und der Quetschwalze 23 der eigentliche Schrotungs- und Einmaischprozeß gestartet. Da nach Starten des Einmaischprozesses permanent Volumenanteile durch Abzug von Maische aus dem Mühlensystem verloren gehen, muß verhindert werden, daß im Inneren der Anlage ein Unterdruck entsteht, durch den erneut Luft von außen angesaugt würde. Dazu wird mit dem Druckmesser 24 der Innendruck der Anlage gemessen und durch Öffnen des Druckregelventils 12 ständig Inertgas zugeführt wird, so daß immer ein konstanter Inertgasüberdruck im Anlageinneren herrscht. Entstehen in der Anlage unzulässige Überdrücke, so werden sie über ein nicht dargestelltes Sicherheitsventil abgelassen.

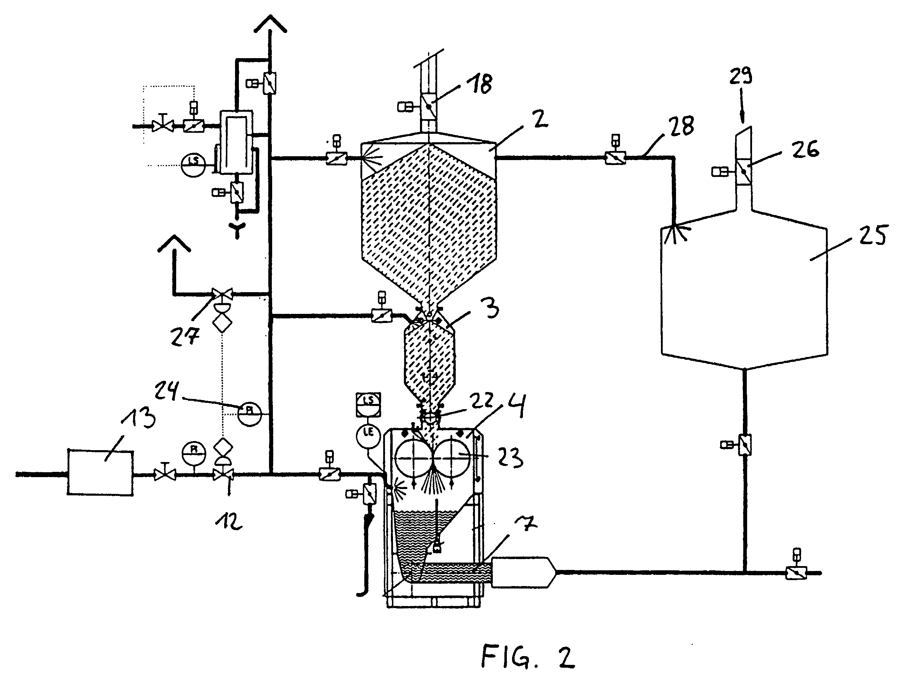

**Fig. 2** zeigt eine zweite Ausführungsform einer erfindungsgemäßen Anlage, die in wesentlichen Teilen mit der ersten Ausführungsform übereinstimmt. Jedoch ist das Maischgefäß 25 über die Leitung 28 über das Mühlensystem mittelbar an die Gaszufuhr angeschlossen. Damit kann auch das Maischgefäß mit Inertgas gefüllt und falls erforderlich mit Inertgas gespült werden. Mit der Klappe 26 kann das Maischgefäß gasdicht verschlossen werden. Die Entlüftung des Maischgefäß erfolgt durch den Auslaß 29 bei geöffneter Klappe 26. Zudem weist die Anlage eine erweiterte Innendruckregelung auf. Der Druckregler 24 wirkt in Abhängigkeit vom Innendruck nicht nur auf das Einlaßventil 12 sondern auch auf das Auslaßventil 27 ein. Somit können nicht nur Unterdrücke sondern auch Überdrücke in der Anlage auf einen Sollwert nachgeregelt werden.

## Patentansprüche

1. Verfahren zur Schrotung und Maischeerzeugung, bei dem der zu verarbeitende Rohstoff in einem Mühlensystem aufgebrochen und eingemaischt wird,
**dadurch gekennzeichnet,**
**daß**
- vor der Befüllung des Mühlensystems (1) mit dem zu schrotenden Gut (6) das Mühlensystem (1) mit einem Inertgas befüllt wird, so daß der im Mühlensystem (1) befindliche Luftsauerstoff im wesentlichen verdrängt wird und
- nach der Befüllung des Mühlensystems (1) mit dem zu schrotenden Gut (6) das Mühlensystem (1) im wesentlichen gasdicht verschlossen wird.

2. Verfahren zur Schrotung und Maischeerzeugung nach Anspruch 1,
**dadurch gekennzeichnet,**
**daß** während des Schrotungs- und Einmaischprozesses das Mühlensystem (1) zumindest bereichsweise mit Inertgas gespült wird, so daß während der Befüllung und anderweitig eindringender Luftsauerstoff verdrängt wird.

3. Verfahren zur Schrotung und Maischeerzeugung nach Anspruch 1 oder 2,
**dadurch gekennzeichnet,**
**daß** in dem Mühlensystem (1) ein Inertgasüberdruck erzeugt wird.

4. Verfahren zur Schrotung und Maischeerzeugung nach einem der Ansprüche 1 bis 3,
**dadurch gekennzeichnet,**
**daß** der Überdruck im Bereich von 2 - 100 Millibar liegt.

5. Verfahren zur Schrotung und Maischeerzeugung nach einem der Ansprüche 1 bis 4
**dadurch gekennzeichnet,**
**daß** das Inertgas schwerer als Luft ist.

6. Verfahren zur Schrotung und Maischeerzeugung nach einem der Ansprüche 1 bis 5
**dadurch gekennzeichnet,**
**daß** als Inertgas Kohlendioxid, Stickstoff oder ähnliche Gasgemische verwendet werden.

7. Verfahren zur Schrotung und Maischeerzeugung nach einem der Ansprüche 1 bis 6
**dadurch gekennzeichnet,**
**daß** als Inertgas Stickstoff verwendet wird, der in einem vorhergehenden Gastrennverfahren aus Luft gewonnen wird.

8. Verfahren zur Schrotung und Maischeerzeugung nach einem der Ansprüche 1 bis 7
**dadurch gekennzeichnet,**
**daß** zur Spülung des Mühlensystems (1) mit Inertgas im Inneren des Mühlensystems eine Inertgasströmung erzeugt wird, die entgegen der Förderrichtung des Rohstoffs gerichtet ist.

9. Verfahren zur Schrotung und Maischeerzeugung nach einem der Ansprüche 1 bis 8
**dadurch gekennzeichnet,**
**daß** auch das dem Mühlensystem (1) nachgeschaltete Maischgefäß (25) gasdicht abgesperrt wird und anschließend mit Inertgas vorgespannt wird.

10. Verfahren zur Schrotung und Maischeerzeugung nach einem der Ansprüche 1 bis 9
**dadurch gekennzeichnet,**
**daß** auch das dem Mühlensystem (1) nachgeschaltete Maischgefäß (25) mit Inertgas gespült wird.

11. Verfahren zur Schrotung und Maischeerzeugung nach einem der Ansprüche 1 bis 10,
**dadurch gekennzeichnet,**
**daß** die Spülung des Mühlensystems (1) mit Inertgas in Abhängigkeit vom Restgehalt an Luftsauerstoff geregelt wird.

12. Anlage zur Schrotung und Maischeerzeugung mit einer Rohstoffzufuhr, einem Maischeabzug und Einrichtungen zur Schrotung und Einmaischung der Rohstoffe,
**dadurch gekennzeichnet,**
**daß** die gesamte Anlage (1) im wesentlichen gasdicht absperrbar ist und über eine Gaszufuhr (11, 12, 13) mit Inertgas beaufschlagt werden kann.

13. Anlage zur Schrotung und Maischeerzeugung nach Anspruch 12,
**dadurch gekennzeichnet,**
**daß** auch das Maischgefäß (25) gasdicht absperrbar ist und über eine Gaszufuhr (28) mit einem Inertgas beaufschlagt werden kann.

14. Anlage zur Schrotung und Maischeerzeugung nach Anspruch 12 oder 13,
**dadurch gekennzeichnet,**
**daß** die Rohstoffzufuhr (5) mit einer im wesentlichen gasdichten Klappe (18) absperrbar ist.

15. Anlage zur Schrotung und Maischeerzeugung nach einem der Ansprüche 12 bis 14,
**dadurch gekennzeichnet,**
**daß** im Malzrumpf (2) und/oder im Konditionierungsschacht (3) und /oder im Mühlenkörper (4) zumindest jeweils eine Einlaßöffnung (19, 20, 21) für die Inertgaszufuhr angeordnet ist.

16. Anlage zur Schrotung und Maischeerzeugung nach einem der Ansprüche 12 bis 15,
**dadurch gekennzeichnet,**
**daß** die Einlaßöffnung (19) für die Inertgaszufuhr im Mühlenkörper (4) im Bereich zwischen Schrotmühle (23) und Maische (7) angeordnet ist.

17. Anlage zur Schrotung und Maischeerzeugung nach einem der Ansprüche 12 bis 16,
**dadurch gekennzeichnet,**
**daß** im Malzrumpf (2) und/oder Konditionierungsschacht (3) und /oder im Mühlenkörper (4) Sonden zur Messung der Gasatmosphäre angeordnet sind.

18. Anlage zur Schrotung und Maischeerzeugung nach einem der Ansprüche 12 bis 17,
**dadurch gekennzeichnet,**
**daß** in der Anlage zumindest ein Sicherungsventil (10) zu Sicherung gegen Über- und/oder Unterdruck angeordnet ist.

19. Anlage zur Schrotung und Maischeerzeugung nach einem der Ansprüche 12 bis 18,
**dadurch gekennzeichnet,**
**daß** in der Anlage zumindest ein regelbares Einlaßventil (12) für die Inertgaszufuhr und zumindest ein regelbares Auslaßventil (27) angeordnet ist, die beide an eine Steuerung (24) zur Regelung des Anlageninnendrucks angeschlossen sind.

20. Anlage zur Schrotung und Maischeerzeugung nach einem der Ansprüche 12 bis 19,
**dadurch gekennzeichnet,**
**daß** die Anlage über ein Wasserschloß (10) entlüftbar ist.

21. Anlage zur Schrotung und Maischeerzeugung nach einem der Ansprüche 12 bis 20,
**dadurch gekennzeichnet,**
**daß** die Gaszufuhr an der Hauptzufuhr und/oder an den einzelnen Einlaßöffnungen (15, 16, 17) der verschiedenen Anlagenteile durch Ventile (11, 15, 16, 17) absperrbar ist.

## Claims

1. Process for crushing and mash production wherein the raw material to be processed is broken up and mashed in a mill system,
**characterised in that**
- prior to the mill system (1) being filled with the material (6) to be crushed the mill system (1) is filled with an inert gas so that the atmospheric oxygen in the mill system (1) is substantially displaced and
- after the mill system (1) has been filled with the material (6) to be crushed the mill system (1) is sealed in substantially gas-tight manner.

2. Process for crushing and mash production according to Claim 1,
**characterised in that**
during the crushing and mashing-in process the mill system (1) is flushed at least zonally with inert gas so that atmospheric oxygen penetrating during the filling and in other ways is displaced.

3. Process for crushing and mash production according to Claim 1 or Claim 2,
**characterised in that**
an inert-gas overpressure is generated in the mill system (1).

4. Process for crushing and mash production according to one of Claims 1 to 3,
**characterised in that**
the overpressure lies in the range from 2 to 100 millibar.

5. Process for crushing and mash production according to one of Claims 1 to 4,
**characterised in that**
the inert gas is heavier than air.

6. Process for crushing and mash production according to one of Claims 1 to 5,
**characterised in that**
use is made of carbon dioxide, nitrogen or similar gas mixtures by way of inert gas.

7. Process for crushing and mash production according to one of Claims 1 to 6,
**characterised in that**
use is made of nitrogen obtained from air in a preceding gas-separation process by way of inert gas.

8. Process for crushing and mash production according to one of Claims 1 to 7,
**characterised in that**
with a view to flushing the mill system (1) with inert gas a current of inert gas which is directed contrary to the direction of transport of the raw material is generated in the interior of the mill system.

9. Process for crushing and mash production according to one of Claims 1 to 8,
**characterised in that**
the mash vessel (25) situated downstream of the mill system (1) is also shut off in gas-tight manner and is then pressurised with inert gas.

10. Process for crushing and mash production according to one of Claims 1 to 9,
**characterised in that**
the mash vessel (25) situated downstream of the mill system (1) is also flushed with inert gas.

11. Process for crushing and mash production according to one of Claims 1 to 10,
**characterised in that**
the flushing of the mill system (1) with inert gas is regulated as a function of the residual content of atmospheric oxygen.

12. Plant for crushing and mash production, with a raw-material supply, a mash outlet and devices for crushing and mashing-in of the raw materials,
**characterised in that**
the entire plant (1) is capable of being shut off in substantially gas-tight manner and can be pressurised with inert gas via a gas supply (11, 12, 13).

13. Plant for crushing and mash production according to Claim 12,
**characterised in that**
the mash vessel (25) is also capable of being shut off in gas-tight manner and can be pressurised with an inert gas via a gas supply (28).

14. Plant for crushing and mash production according to Claim 12 or 13,
**characterised in that**
the raw-material supply (5) is capable of being shut off with a substantially gas-tight flap valve (18).

15. Plant for crushing and mash production according to one of Claims 12 to 14,
**characterised in that**
at least one inlet opening (19, 20, 21) for the supply of inert gas is arranged in each case in the malt hopper (2) and/or in the conditioning shaft (3) and/or in the mill body (4).

16. Plant for crushing and mash production according to one of Claims 12 to 15,
**characterised in that**
the inlet opening (19) for the supply of inert gas is arranged in the mill body (4) in the region between malt mill (23) and mash (7).

17. Plant for crushing and mash production according to one of Claims 12 to 16,
**characterised in that**
probes for measuring the gas atmosphere are arranged in the malt hopper (2) and/or conditioning shaft (3) and/or in the mill body (4).

18. Plant for crushing and mash production according to one of Claims 12 to 17,
**characterised in that**
at least one safety valve (10) for protection against overpressure and/or underpressure is arranged in the plant.

19. Plant for crushing and mash production according to one of Claims 12 to 18,
**characterised in that**
at least one controllable inlet valve (12) for the supply of inert gas and at least one controllable outlet valve (27), which are both connected to a control system (24) for regulating the internal pressure of the plant, are arranged in the plant.

20. Plant for crushing and mash production according to one of Claims 12 to 19,
**characterised in that**
the plant is capable of being deaerated via a surge tank (10).

21. Plant for crushing and mash production according to one of Claims 12 to 20,
**characterised in that**
the gas supply is capable of being shut off at the main supply and/or at the individual inlet openings (15, 16, 17) of the various parts of the plant by means of valves (11, 15, 16, 17).

## Revendications

1. Procédé de broyage et fabrication de moût, par lequel la matière première à transformer est écrasée et foulée dans un système à moulin,
**caractérisé en ce que**
avant le remplissage du système à moulin (1) avec le produit à broyer (6), le système à moulin (1) est rempli de gaz inerte, de sorte que l'oxygène de l'air se trouvant dans le système à moulin (1) est substantiellement refoulé et
qu'après le remplissage du système à moulin (1) avec le produit à broyer (6), le système à moulin (1) est fermé substantiellement de manière étanche aux gaz.

2. Procédé de broyage et de fabrication de moût selon la revendication 1,
**caractérisé en ce que**
pendant le processus de broyage et de fabrication de moût, le système à moulin (1) est nettoyé au moins par endroits avec du gaz inerte, de sorte que l'oxygène de l'air pénétrant pendant le remplissage et par d'autres voies est refoulé.

3. Procédé de broyage et de fabrication de moût selon la revendication 1,
**caractérisé en ce que**
une surpression de gaz inerte est créée dans le système à moulin (1).

4. Procédé de broyage et de fabrication de moût selon une des revendications 1 à 3,
**caractérisé en ce que**
la surpression se situe dans une fourchette de 2 à 100 millibar.

5. Procédé de broyage et de fabrication de moût selon une des revendications 1 à 4,
**caractérisé en ce que**
le gaz inerte est plus lourd que l'air.

6. Procédé pour le broyage et la fabrication de moût selon une des revendications 1 à 5,
**caractérisé en ce que**
on utilise comme gaz inerte du dioxyde de carbone, de l'azote ou des mélanges gazeux similaires.

7. Procédé pour le broyage et la fabrication de moût selon une des revendications 1 à 6,
**caractérisé en ce que**
on utilise comme gaz inerte de l'azote qui est extrait de l'air dans un procédé préalable de séparation gazeuse.

8. Procédé pour le broyage et la fabrication de moût selon une des revendications 1 à 7,
**caractérisé en ce que**
un flux de gaz inerte est créé pour le lavage du système à moulin (1) avec du gaz inerte à l'intérieur du système à moulin, flux qui est orienté à l'opposé du sens de convoyage de la matière première.

9. Procédé pour le broyage et la fabrication de moût selon une des revendications 1 à 8,
**caractérisé en ce que**
le récipient de moût (25) installé en aval du système à moulin (1) est aussi fermé de manière étanche et ensuite précontraint au gaz inerte.

10. Procédé pour le broyage et la fabrication de moût selon une des revendications 1 à 9,
**caractérisé en ce que**
le récipient de moût (25) installé en aval du système à moulin (1) est aussi nettoyé au gaz inerte.

11. Procédé pour le broyage et la fabrication de moût selon une des revendications 1 à 10,
**caractérisé en ce que**
le nettoyage du système à moulin (1) au gaz inerte est régulé en fonction de la teneur résiduelle en oxygène de l'air.

12. Installation pour le broyage et la fabrication de moût avec une alimentation en matière première, un extracteur de moût et des installations pour le broyage et le foulage des matières premières,
**caractérisée en ce que**
l'ensemble de l'installation (1) peut substantiellement être fermée de manière étanche aux gaz et peut recevoir du gaz inerte par l'intermédiaire d'une alimentation en gaz (11, 12, 13).

13. Installation pour le broyage et la fabrication de moût selon la revendication 12,
**caractérisée en ce que**
le récipient de moût (25) peut aussi être fermé de manière étanche aux gaz et peut recevoir un gaz inerte par l'intermédiaire d'une alimentation en gaz (28).

14. Installation pour le broyage et la fabrication de moût selon la revendication 12 ou 13,
**caractérisée en ce que**
l'alimentation en matière première (5) peut être fermée à l'aide d'un clapet (18) substantiellement étanche aux gaz.

15. Installation pour le broyage et la fabrication de moût selon une des revendications 12 à 14,
**caractérisée en ce que**
respectivement au moins un orifice d'entrée (19, 20, 21) pour l'alimentation en gaz inerte est disposé dans le tronc à malt (2) et/ou le puits de conditionnement (3) et/ou dans le corps du moulin (4).

16. Installation pour le broyage et la fabrication de moût selon une des revendications 12 à 15,
**caractérisée en ce que**
l' orifice d'entrée (19) pour l'alimentation en gaz inerte est disposé dans le corps du moulin (4) dans la zone située entre le moulin de broyage (23) et le moût (7).

17. Installation pour le broyage et la fabrication de moût selon une des revendications 12 à 16,
**caractérisée en ce que**
des sondes pour la mesure de l'atmosphère gazeuse sont disposées dans le tronc à malt (2) et/ou dans le puits de conditionnement (3) et/ou dans le corps du moulin (4).

18. Installation pour le broyage et la fabrication de moût selon une des revendications 12 à 17,
**caractérisée en ce que**
dans l'installation est disposée au moins une soupape de sécurité (10) pour une sécurisation contre la sur- et/ou la sous-pression.

19. Installation pour le broyage et la fabrication de moût selon une des revendications 12 à 18,
**caractérisée en ce que**
dans l'installation est disposée au moins une soupape réglable d'entrée (12) pour l'alimentation en gaz inerte et au moins une soupape réglable de sortie (27), les deux étant raccordées à un organe de commande (24) pour le réglage de la pression interne de l'installation.

20. Installation pour le broyage et la fabrication de moût selon une des revendications 12 à 19,
**caractérisée en ce que**
l'installation peut être ventilée par une cheminée d'équilibre(10).

21. Installation pour le broyage et la fabrication de moût selon une des revendications 12 à 20,
**caractérisée en ce que**
l'alimentation en gaz peut être fermée à l'aide de soupapes d'entrée (11, 15, 16, 17) sur l'alimentation principale et/ou sur les différents orifices d'entrée (15, 16, 17) des différentes parties de l'installation.
